# FASCICULE DE BREVET EUROPEEN

(11) **EP 2 132 076 B1**
(45) Date de publication et mention de la délivrance du brevet: **03.08.2011**
(21) Numéro de dépôt: 08717533.7
(22) Date de dépôt: 07.03.2008
(51) Int. Cl.: B60W 30/18

(54) **DISPOSITIF ET PROCEDE DE REGULATION DE MOTRICITE POUR VEHICULE AUTOMOBILE**
VORRICHTUNG UND VERFAHREN ZUM EINSTELLEN DES FAHRVERHALTENS EINES KRAFTFAHRZEUGS
DEVICE AND METHOD FOR ADJUSTING THE DRIVEABILITY OF AN AUTOMOBILE

(30) Priorité: 13.03.2007 FR 0753777
(43) Date de publication de la demande: 16.12.2009
(73) Titulaire: Peugeot Citroën Automobiles S.A., 78140 Vélizy Villacoublay (FR); Robert Bosch GmbH, 70442 Stuttgart (DE)
(72) Inventeur: BLAISE, Philippe, F-25490 Dampierre Les Bois (FR); CHARPIN, Emmanuel, F-25420 Voujeaucourt (FR); JOUCGNOUX, Damien, F-37130 Mazières de Touraine (FR)
(74) Mandataire: Thinat, Michel
(86) Numéro de dépôt international: PCT/EP2008/052786
(87) Numéro de publication internationale: WO 2008/113701

(56) Documents cités:
- DE-A1- 4 133 060
- DE-A1- 19 726 214
- US-A1- 2003 216 850

## Description

La présente invention concerne un procédé et un dispositif de régulation de motricité pour véhicules automobiles.

On connaît des dispositifs de contrôle de dérapage, ou ASR « Acceleration Skid Control » en langue anglaise, destinés à améliorer la prestation de motricité en roulage d'un véhicule automobile sur tout type de terrain.

DE 197262141 décrit un dispositif de régulation de motricité d'au moins une roue d'un véhicule, notamment un véhicule automobile, comportant un moteur d'entraînement de la roue, des moyens de contrôle moteur un moyen fournissant une information d'un niveau d'accélération souhaité par le conducteur du véhicule et une unité de commande électronique comportant des moyens de calcul recevant les différentes informations, les moyens de calcul étant configurés pour obtenir un niveau d'accélération du véhicule conforme au niveau d'accélération souhaité par le conducteur.

Le contrôle des roues par un tel dispositif est effectué pour différentes situations de roulage du véhicule notamment en marche avant ou en marche arrière sur des routes ou chemins présentant des portions boueuses, de l'herbe, des ornières, bourbiers (roulage tout chemin), du sable, de la neige ou glace et pour différents niveaux d'inclinaison (ou pente) et dévers du véhicule liés à la configuration du sol sur lequel évolue le véhicule.

Ces dispositifs anti-patinage sont applicables sur tout véhicule à deux roues motrices 4x2 ou quatre roues motrices 4x4 équipé d'un système de contrôle dynamique de trajectoire désigné plus généralement par système ESP, ESP étant l'acronyme pour « Electronic Stabily Control » en langue anglaise, et permettent de faire évoluer de manière significative la prestation de motricité des véhicules. Le système ESP assure différentes fonctions comme le contrôle de lacets CDC, l'antiblocage de roues ou ABS « Anti lock Braking System » en langue anglaise, l'anti-patinage des roues ou ASR et autres fonctions de sécurité de conduite du véhicule.

La figure 1 montre un schéma de principe des différents blocs fonctionnels d'un système ESP de l'état de l'art.

La figure 2 représente de façon simplifiée un véhicule équipé du système ESP de la figure 1.

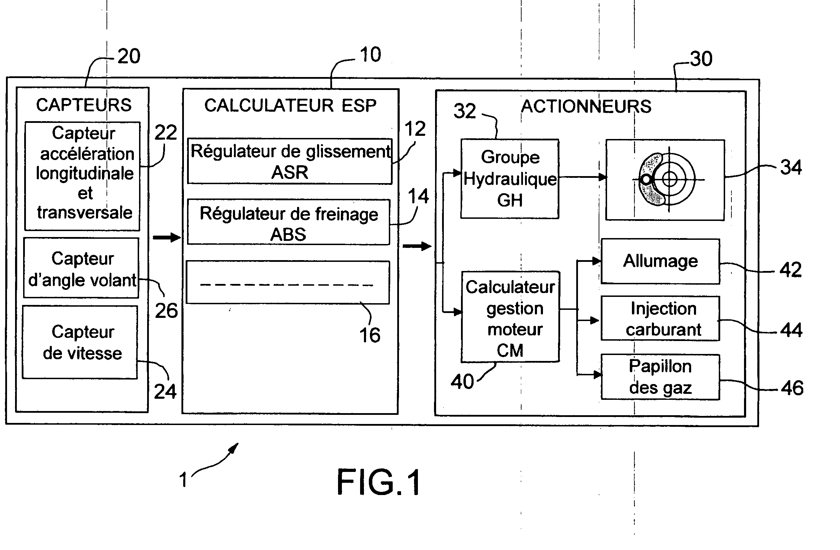

Le système ESP 1 de la figure 1 comporte un calculateur ESP 10 pouvant être équipé de plusieurs modules de régulation de la motricité du véhicule tels qu'un régulateur de glissement ASR 12, désigné aussi par anti-patinage des roues, un régulateur de freinage ABS 14, désigné aussi par anti-bloquage des roues, mais aussi d'autres modules 16 assurant différentes fonctions de sécurité de conduite du véhicule, non détaillés.

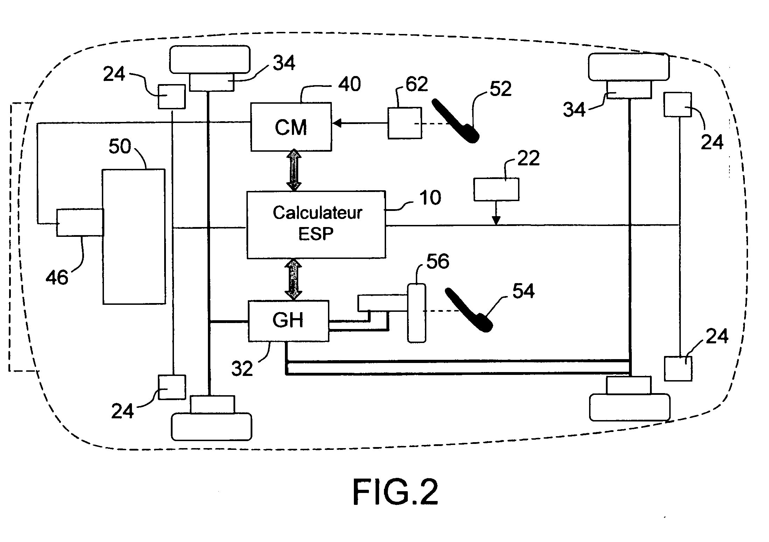

Pour la mise en oeuvre des fonctions de sécurité, le véhicule de la figure 2 est équipé de capteurs 22, 24, 26 fournissant des informations dont les valeurs sont liées à l'évolution et la situation de vie du véhicule mais aussi à la volonté du conducteur. Parmi ces capteurs 20, au moins un capteur multiaxe 22 fournissant des informations d'accélération longitudinale et transversale du véhicule, au moins un capteur de vitesse 24 de rotation des roues, au moins un capteur de paramètres liés à la volonté du conducteur tels qu'un capteur d'angle volant 26 (non représenté sur la figure 2) fournissant une information d'angle de rotation du volant actionné par le conducteur.

Le véhicule comporte des actionneurs 30 agissant sur des éléments de propulsion ou de freinage du véhicule. Un groupe hydraulique GH 32 pour la répartition du couple de freinage sur les freins 34 du véhicule, un calculateur de gestion moteur CM 40 agissant sur l'angle d'allumage moteur 42, l'injection de carburant 44 et le papillon des gaz 46.

Le véhicule de la figure 2 équipé d'un système ESP 1, comporte un moteur thermique 50 d'entraînement du véhicule commandé en régime par le calculateur de gestion moteur CM 40, une pédale d'accélération 52 reliée au calculateur de gestion moteur CM 40, une pédale de frein 54 actionnant par un amplificateur de frein 56 le groupe hydraulique GH 32 pour la commande des freins.

Le calculateur ESP comporte des moyens pour activer un ou plusieurs modules 12, 14, 16 de régulation de la motricité du véhicule en fonction des différents paramètres d'évolution du véhicule et/ou de la situation de vie du véhicule et/ou de la volonté du conducteur.

Les dispositifs anti-patinage ASR de l'état de l'art équipent actuellement des véhicules tout terrain mais comportent des défauts et insuffisances. Pour montrer ces insuffisances nous allons considérer différentes situations d'évolution d'un véhicule automobile sur un terrain ou une route que nous appelons « situations de vie ».

Nous utiliserons par la suite le terme « décollage » signifiant le passage d'une situation où le véhicule est à l'arrêt (vitesse nulle) vers une situation de démarrage du véhicule (vitesse non nulle).

Le véhicule peut évoluer sur deux principales catégories de terrain, des terrains à faible adhérence, par exemple comportant du sable, des graviers, de la neige, de la glace ; des terrains à forte adhérence comme les pistes ou routes en asphalte humide ou en asphalte sec.

Nous allons considérer deux principaux cas de situation de vie suivants :
- un premiers type de situation de vie sur des terrains d'évolution du véhicule à faible, moyenne ou haute adhérence, homogène ou dissymétrique, dans les cas d'un décollage à plat du véhicule ou d'un décollage en pente et en dévers.

Le fonctionnement, dans ce premiers type de situation de vie, des systèmes de régulation de l'état de l'art produit un contrôle immédiat du moteur et des freins pour permettre de ramener les deux ou les quatre roues du véhicule sur une consigne fixe quelle que soit l'adhérence, la pente ou le devers du terrain.

L'impact sur véhicule ressenti par le conducteur est, sur un sol à faible adhérence, l'absence de motricité, un véhicule difficilement contrôlable en dévers, sur un sol ou une route à haute adhérence, des coupures moteur peuvent se produire ce qui pénalise la vitesse de décollage et donc la sécurité.
- un deuxième type de situation de vie sur des terrains d'évolution du véhicule à faible ou moyenne adhérence, homogène ou dissymétrique, pour une progression du véhicule sur terrain en pente et en dévers.

Le fonctionnement, dans ce deuxième type de situation de vie, des systèmes de régulation de l'état de l'art, produit une régulation des deux ou des quatre roues autour d'une consigne fixe déterminée qui peut être redéfinie lorsqu'il y a détection de neige profonde pour optimiser la motricité.

L'impact sur véhicule ressenti par le conducteur est, sur un sol de faible adhérence, une absence de motricité et une sensation de frustration par le conducteur devant l'échec de la progression du véhicule.

Afin de palier les inconvénients des dispositifs anti-patinage de l'état de l'art, l'invention propose un dispositif de régulation de motricité d'au moins une roue d'un véhicule, notamment un véhicule automobile, comportant un moteur d'entraînement de la roue, des moyens de contrôle moteur, un moyen fournissant une information d'un niveau d'accélération souhaité par le conducteur du véhicule, un moyen fournissant une information d'un niveau d'accélération (Av) du véhicule et une unité de commande électronique comportant des moyens de calcul recevant les différentes informations, les moyens de calcul étant -configurés pour- obtenir un niveau d'accélération du véhicule (Av) conforme au niveau d'accélération souhaité par le conducteur. Selon l'invention

le dispositif de régulation de motricité comporte en outre un moyen fournissant une information d'inclinaison du véhicule.

Dans une réalisation, le niveau d'accélération souhaité par le conducteur est déterminé par la course, ou déplacement, d'un organe de commande d'accélération du véhicule.

Dans une autre réalisation, l'organe de commande d'accélération est configuré pour pouvoir se déplacer, lorsqu'il est actionné par le conducteur, entre une position de repos correspondant à un niveau d'accélération nul et une position maximale correspondant à un niveau d'accélération maximum du véhicule.

Dans une autre réalisation, les moyens de calcul comportent en outre un régulateur d'accélération pilotant les moyens de contrôle moteur.

Dans une autre réalisation, l'unité de commande électronique est un calculateur ESF assurant des fonctionnalités de sécurité du véhicule.

L'invention propose aussi un procédé de régulation de motricité des roues d'un véhicule automobile pour la mise en oeuvre du dispositif de régulation de motricité selon l'invention, le véhicule ayant un moteur d'entraînement d'au moins une roue du véhicule, des moyens de contrôle du régime moteur, un moyen fournissant une information d'un niveau d'accélération souhaité par le conducteur du véhicule, un moyen fournissant une information d'un niveau d'accélération (Av) du véhicule, et une unité de commande électronique comportant des moyens de calcul recevant les différentes informations, caractérisé en ce qu'il consiste à contrôler te moteur par l'unité de commande électronique pour obtenir un niveau d'accélération du véhicule conforme au niveau d'accélération souhaité par le conducteur.

Selon l'invention procédé comporte au moins les étapes suivantes :
- détermination d'une consigne d'accélération cible (Ac) à partir du niveau d'accélération souhaitée par le conducteur en fonction d'une adhérence au sol le niveau d'adhérence (T) est corrigé d'un facteur lié à la valeur de la pente issue d'un moyen (60) fournissant une information d'inclinaison du véhicule lorsque le véhicule évolue sur un terrain en pente ;
- comparaison entre le niveau l'accélération du véhicule (Av) et la consigne d'accélération cible (Ac);
- si l'accélération du véhicule (Av) est conforme à la consigne d'accélération cible (Ac), le contrôle moteur est inchangé, puis retour à l'étape de comparaison entre le niveau d'accélération du véhicule et la consigne d'accélération cible (Ac) ;
- si le niveau d'accélération du véhicule n'est pas conforme à la consigne d'accélération cible (Ac), modification du contrôle moteur puis, retour à l'étape de comparaison entre le niveau d'accélération du véhicule et la consigne d'accélération cible.

Dans une réalisation du procédé, la consigne d'accélération cible (Ac) est obtenue à partir de la volonté d'accélération souhaitée par le conducteur corrigée par le niveau d'adhérence des roues sur le sol.

Le dispositif régulateur de motricité selon l'invention met en oeuvre un nouveau concept qui vient remplacer le système anti-patinage classique. Il consiste, pour un véhicule 4x2 et 4x4, à améliorer la prestation de motricité en roulage sur route haute adhérence, mouillée et sur route ou terrain basse adhérence tels que décrits précédemment

L'amélioration de la motricité est obtenue par ce dispositif dans les limites de la physique en particulier de l'adhérence disponible des roues sur le sol, du dénivelé du terrain ou encore de la garde au sol du véhicule dans certaines conditions.

Le dispositif consiste principalement en une évolution des algorithmes de l'anti-patinage de l'état de l'art avec une approche plus dynamique de-la motricité. Le dispositif est potentiellement applicable sur tout véhicule 4x2 et 4x4 équipé d'un système ESP et permet de faire évoluer de manière significative la prestation motricité des véhicules. Il apporte en outre une aide précieuse aux novices comme aux conducteurs expérimentés.

Le dispositif selon l'invention permet d'optimiser la motricité, c'est-à-dire, d'obtenir le meilleur point de fonctionnement du pneumatique en fonction de l'adhérence disponible et de produire la meilleure accélération possible conformément à la demande du conducteur.

L'invention sera mieux comprise à l'aide d'exemples de réalisation d'un dispositif de régulation selon l'invention en référence aux dessins indexés dans lesquels :
- la figure 1, déjà décrite, montre un schéma de principe d'un système ESP comportant un dispositif anti-patinage ASR de l'état de l'art ;
- la figure 2, déjà décrite, représente de façon simplifiée un véhicule équipé du dispositif anti-patinage ASR de la figure 1 ;

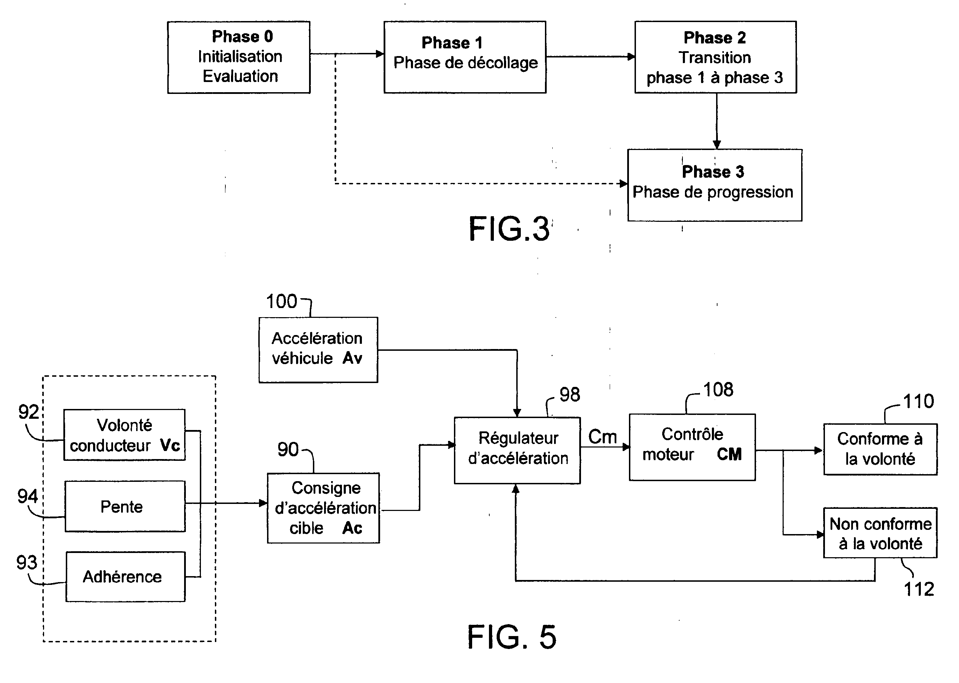

- la figure 3 montre un organigramme des Phases 0,1, 2, 3 du procédé mis en oeuvre par un module anti-patinage de l'état de l'art ayant fait l'objet d'une demande de brevet en France n°06 07392 ;

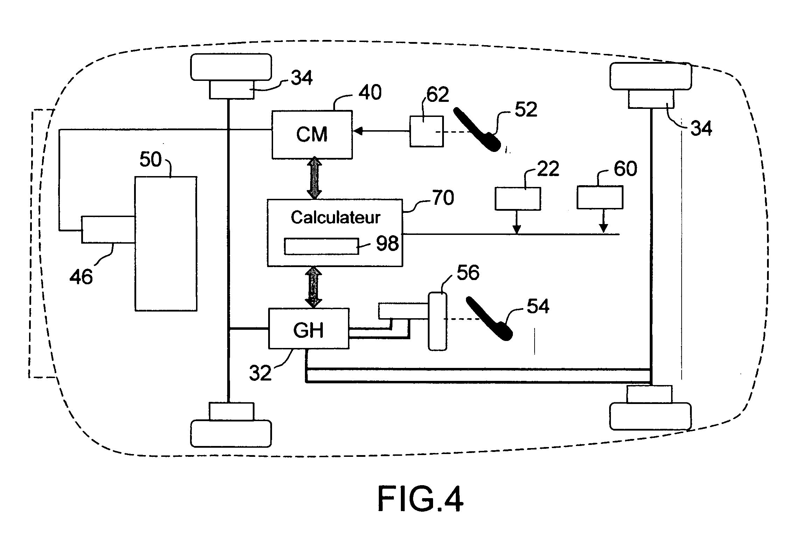

- la figure 4 montre le véhicule de la figure 1 équipé d'un dispositif régulateur de motricité; selon l'invention;
- la figure 5 montre un synoptique d'un procédé de régulation de motricité, selon l'invention ;

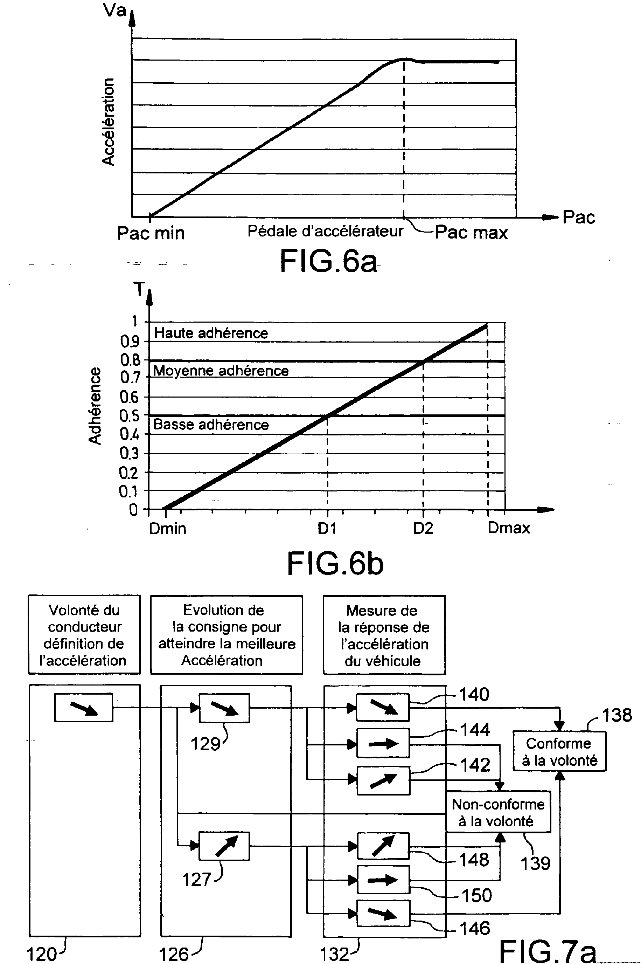

- la figure 6a montre l'accélération souhaitée par le conducteur en fonction de la course de la pédale d'accélérateur ;
- la figure 6b montre la limitation de la valeur de la course de la pédale d'accélération en fonction de différents taux d'adhérence au sol ; et

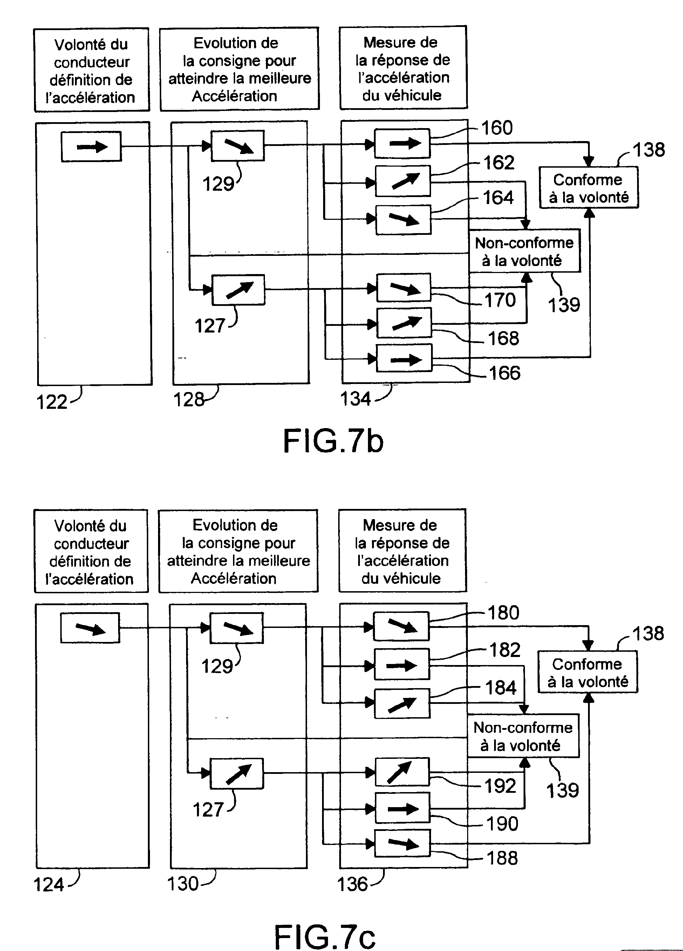

- les figures 7a, 7b et 7c, montrent des synoptiques selon trois configurations de régulation de motricité du véhicule, selon l'invention.

Le dispositif selon l'invention s'inscrit dans le cadre d'un dispositif anti-patinage pour route dégradée décrit dans une première demande de brevet en France N° 06 07392.

Le logiciel du module régulateur de glissement ASR dans ce dispositif anti-patinage est configuré pour mettre en oeuvre :
- des lois de commande spécifiques des actionneurs du véhicule pour la gestion des situations de vies du véhicule selon trois phases, Phase 0, Phase 1 et Phase 3, une Phase 2 étant une phase de transition entre la Phase 1 et la Phase 3.
- des lois de commande spécifiques de la gestion du taux de patinage avec prise en compte de la volonté du conducteur.

La figure 3 montre un organigramme des Phases 0,1, 2, 3 du procédé mis en oeuvre par un module anti-patinage de l'état de l'art

Ces- phases peuvent être succinctement décrites de la façon suivante:
- Phase 0 : analyse et évaluation des conditions d'adhérence de pente, de dévers et de la volonté du conducteur ;
- Phase 1 ou « phase de décollage » : se caractérise par le choix d'une roue qui est freinée pour avoir de la motricité en utilisant au maximum l'adhérence disponible et de passer le couple au sol ;
- Phase 2 est une phase de transition entre la phase 1 et la Phase 3 ; et
- Phase 3 est une phase de progression du véhicule.

La figure 4 montre le véhicule de la figure 1 équipé d'un dispositif de régulation de motricité selon l'invention.

Suivant l'accélération du véhicule calculée pendant un temps fixe déterminé, il est possible de passer en Phase 3 directement (voir la ligne en trait interrompu)

Le véhicule de la figure 4 comporte un moteur d'entraînement thermique 50 commandé en couple ou en régime par le calculateur du contrôle moteur CM 40.

Pour assurer les fonctionnalités du procédé et du dispositif pour la mise en oeuvre du procédé selon l'invention, le véhicule comporte, un moyen 62 fournissant une information de la course de la pédale d'accélération 52 actionnée par le conducteur, un moyen fournissant une information du niveau d'accélération du véhicule 22, et des moyens de contrôle moteur 70.

Il peut comporter en outre un moyen 60 fournissant une information d'inclinaison (pente) du véhicule.

Ces différents moyens peuvent être des capteurs mesurant les différentes informations ou des moyens logiciels du contrôle moteur estimant lesdites informations à partir de différents algorithmes tel que par exemple, pour fournir l'accélération du véhicule, un algorithme basé sur un écart de vitesse des roues en fonctions du temps.

Dans cette réalisation de la figure 4, l'accélération souhaitée par le conducteur est déterminée par la course de la pédale d'accélération 52 du véhicule.

Selon une principale caractéristique de l'invention, les moyens de contrôle moteur 70 sont configurés pour obtenir un niveau d'accélération du véhicule conforme au niveau d'accélération souhaitée par le conducteur. A cet effet, les moyens de contrôle moteur 70 pilotent le calculateur moteur 40 agissant sur l'allumage moteur 42, l'injection de carburant 44 et le papillon des gaz 46.

D'une façon générale, les moyens de contrôle moteur 70 sont mis en oeuvre par un calculateur comportant des moyens logiciels mettant en oeuvre les fonctionnalités du dispositif de régulation de motricité. Ce calculateur peut être un calculateur ESP assurant des fonctionnalités de sécurité du véhicule tel que représenté aux figures 1 et 2.

La pédale d'accélération est configurée pour pouvoir se déplacer, lorsqu'elle est actionnée par le conducteur, entre une position de repos correspondant à un niveau d'accélération nul et une position maximale correspondant à un niveau d'accélération maximum du véhicule. Le capteur de déplacement de pédale 62 fournit au contrôle moteur CM 40 et au calculateur 70 une information correspondant au déplacement de la pédale d'accélération et par conséquent au niveau d'accélération souhaitée par le conducteur.

Le calculateur 70 comporte, en outre, des moyens de détermination de l'adhérence des roues sur le sol.

Nous allons par la suite décrire, sous la forme d'un procédé, les nouvelles fonctionnalités du dispositif régulateur de motricité selon l'invention lors de la phase de progression du véhicule ou Phase 3.

La figure 5 montre un synoptique d'un procédé de régulation de motricité, selon l'invention, dans cette Phase 3, ou phase de progression du véhicule.

Le procédé comporte au moins les étapes suivantes.

Dans une première étape, le procédé selon l'invention consiste à déterminer une consigne d'accélération cible Ac 90 à partir de la volonté 92 du conducteur corrigée d'un facteur lié à l'adhérence 93 et à la pente 94.

La volonté d'accélération du véhicule par le conducteur est matérialisée par un enfoncement plus ou moins important de la pédale d'accélération 52.

Le capteur de pédale 62, fournit une information de la position de la pédale d'accélération au calculateur 70.

La volonté d'accélération Va n'est pas directement transmise par le calculateur 70 au contrôle moteur CM 40 mais corrigée préalablement par des facteurs extérieurs au véhicule que le conducteur ne peux pas déterminer précisément ou dont il ne tient pas compte. Il est, par exemple, inutile de transmettre une forte accélération en consigne Ac si l'adhérence au sol est faible, ce qui produirait un glissement important des roues sur le sol et une absence de progression du véhicule.

De même, si le véhicule se trouve sur un sol en pente, le taux de patinage T (niveau d'adhérence) sera corrigé d'un facteur lié à la valeur de cette pente.

La figure 6a montre l'évolution d'une accélération souhaitée Va par le conducteur en fonction de la course Pac de la pédale d'accélérateur.

L'évolution de la courbe représentative de cette fonction présente une partie linaire de pente déterminée, délimitée par une limite inférieure Pacmin une limite supérieure Pacmax.

L'évolution de cette courbe se termine par un pallier pour une valeur de course pédale supérieure à la limite supérieure Pacmax (débattement maximum de la pédale), pallier pour lequel l'accélération reste constante.

La figure 6b montre la limitation de la valeur de la course de la pédale d'accélération en fonction de différents taux d'adhérence au sol T.

Le taux de patinage T est compris entre 0, pour une adhérence nulle, et 1 pour le maximum d'adhérence.

Pour une adhérence déterminée (basse, moyenne, haute), la valeur de la course de la pédale d'accélérateur sera comprise entre la valeur minimale Pacmin et la valeur maximale Pacmax et l'information envoyée par l'ESP au contrôle moteur après traitement ne pourra pas excéder une valeur de consigne D1 qui varie entre Dmin et Dmax

-Par basse adhérence, dans l'exemple décrit, on entend un taux T compris entre 0 et 0,5 pour lequel la valeur de la course de la pédale d'accélérateur est comprise entre Dmin et D1 (D1 supérieure à Dmin).

Par moyenne adhérence, dans l'exemple décrit, on entend un taux T étant compris entre 0,5 et 0,8, pour lequel la valeur de la course de la pédale d'accélérateur est comprise entre D1 et D2 (D2 supérieure à D1).

Par haute adhérence, dans l'exemple décrit, on entend un taux T étant compris entre 0,8 et 1 pour lequel la valeur de la course de la pédale d'accélérateur est comprise entre D1 et D2 (D2 supérieure à D1).

Dans une deuxième étape, le procédé selon l'invention consiste à comparer, par un régulateur d'accélération 98 du calculateur 70, l'accélération du véhicule 100 Av fournie par le capteur d'accélération 22 et la consigne d'accélération cible Ac 90 (volonté du conducteur corrigée) pour fournir ensuite une commande d'accélération Cm au contrôle moteur CM 40 afin d'obtenir une accélération du véhicule Av proche de l'accélération cible Ac 90.

Dans une troisième étape, le procédé selon l'invention consiste à comparer l'accélération du véhicule à la consigne d'accélération cible pour déterminer :
- si l'accélération du véhicule Av 100 est conforme 110 à la consigne d'accélération cible Ac 90, auquel cas, les paramètres de contrôle moteur sont maintenus ;
- si l'accélération du véhicule Av n'est pas conforme 112 à la consigne d'accélération cible Ac, auquel cas, le régulateur d'accélération 98 modifie la commande d'accélération Cm du contrôle moteur CM 40 pour obtenir une autre accélération Av du véhicule et se rapprocher de la consigne d'accélération cible Ac 90.

Les figures 7a, 7b et 7c, montrent les synoptiques de trois configurations de régulation de motricité du véhicule, selon l'invention.

La figure 7a montre une première configuration résultant d'une volonté du conducteur d'accélérer.

La figure 7b montre une deuxième configuration résultant d'une volonté du conducteur-de maintenir l'accélération ;

La figure 7c montre une troisième configuration résultant d'une volonté du conducteur de décélération ;

Ces trois configurations comportent les étapes suivantes :
Dans une première étape :
   - définition de la consigne d'accélération cible, tel que décrit précédemment, en fonction de la volonté du conducteur corrigée de l'adhérence et de l'inclinaison du véhicule :
   - volonté du conducteur d'accélérer 120 ;
   - volonté du conducteur de maintenir l'accélération 122 ;
   - volonté du conducteur de décélérer 124.
Dans une deuxième étape suivante 126, 128, 130 :
   - fourniture par le régulateur d'accélération 98 d'une consigne d'accélération au contrôle moteur CM (contrôle des paramètres moteur) pour atteindre la meilleure accélération conforme à la volonté du conducteur :
   - consigne d'accélération croissante 127 ;
   - consigne d'accélération décroissante 129
Dans une troisième étape suivante 132, 134, 136 :
   - mesure de la réponse de l'accélération du véhicule :
Dans cette troisième étape :
   - soit la mesure de la réponse de l'accélération du véhicule est conforme 138 à la volonté du conducteur et les paramètres de contrôle moteur sont maintenus ;
   - soit la mesure de la réponse de l'accélération du véhicule est non conforme à la volonté du conducteur 139 et retour à la deuxième étape 126, 128, 130 pour charger la consigne d'accélération.

Le procédé est maintenant décrit, ci-après, plus en détail.

Lorsque la volonté du conducteur et d'accélérer 1-20 (voir figure 7a) :
- une consigne d'accélération décroissante 129, peut entraîner soit une augmentation 140 conforme à la volonté du conducteur, soit une diminution 142 ou un maintient 144 de l'accélération du véhicule non conforme à la volonté du conducteur (définition de l'accélération) ;
- une consigne d'accélération croissante 127, peut entraîner soit une augmentation 146 conforme à la volonté du conducteur, soit une diminution 148 ou un maintient 150 de l'accélération du véhicule non -conforme à la volonté du conducteur.

Lorsque la volonté du conducteur est de maintenir l'accélération 122 :
- une consigne d'accélération décroissante 129, peut entraîner soit un maintien de l'accélération 160 du véhicule conforme à la volonté du conducteur, soit une augmentation 162 ou une diminution 164 de l'accélération du véhicule non conforme à la volonté du conducteur ;
- une consigne d'accélération décroissante127, peut entraîner soit un maintien de l'accélération 166 du véhicule conforme à la volonté du conducteur, soit une augmentation 168 ou une diminution 170 l'accélération du véhicule non conforme à la volonté du conducteur.

Lorsque la volonté du conducteur est de décélérer 124 :
- une consigne d'accélération décroissante 129, peut entraîner soit une diminution de l'accélération 180 du véhicule conforme à la volonté du conducteur, soit un maintien 182 ou une augmentation 184 de l'accélération du véhicule non conforme à la volonté du conducteur ;
- une consigne d'accélération croissante 127, peut entraîner soit une diminution 188 conforme à la volonté du conducteur, soit un maintien 190 ou une augmentation 192 de l'accélération du véhicule non conforme à la volonté du conducteur.

La modification de la consigne d'accélération entraîne une modification des paramètres du régime du moteur par le calculateur du contrôle moteur.

Les intérêts économiques et techniques de l'invention sont nombreux, notamment sur des terrains d'évolution du véhicule à faible ou forte adhérence et soit dans le cas d'un décollage à plat du véhicule sur faible moyenne et haute adhérence homogène ou dissymétrique ou dans le cas d'un décollage en pente et en devers sur faible, moyenne et haute adhérence homogène ou dissymétrique.

Sur ce type de terrains, le régulateur d'accélération est configuré pour effectuer une évaluation de l'adhérence et de la pente et la prise en compte de la volonté du conducteur pour le calcul de la consigne d'accélération.

L'Impact apporté par le dispositif selon l'invention sur les prestations clients est notable, sur des terrains à faible adhérence sur lesquels le véhicule reste dirigeable malgré la recherche de motricité. Sur des terrains à haute adhérence, le conducteur ne subit plus des coupures moteur, ce qui apporte une meilleure sécurité lors des démarrages rapides.

Lorsque le véhicule évolue sur des terrains en pente et en dévers sur faible, moyenne adhérence, homogène ou dissymétrique, le régulateur d'accélération est configuré pour effectuer une recherche du point de fonctionnement du pneumatique afin de fournir la meilleure accélération possible en fonction de l'adhérence, de la pente et du dévers et de la volonté du conducteur.

L'impact sur les prestations clients sur des terrains de faible adhérence se traduit par une motricité et une dirigeabilité importante. Le conducteur n'a plus de sensation de frustration. Une plus grande sécurité lors des démarrages et une optimisation de l'adhérence sont aussi disponibles.

Le dispositif et le procédé selon l'invention permettent ainsi de trouver le meilleur point de fonctionnement du pneumatique en fonction de l'adhérence disponible et de produire la meilleure accélération possible conformément à la demande du conducteur.

## Revendications

1. Dispositif de régulation de motricité d'au moins une roue d'un véhicule, notamment un véhicule automobile, comportant un moteur d'entraînement (50) de la roue, des moyens de contrôle moteur (40), un moyen (62) fournissant une information d'un niveau d'accélération souhaité par le conducteur du véhicule, un moyen (22) fournissant une information d'un niveau d'accélération (Av) du véhicule et une unité de commande électronique comportant des moyens de calcul (70) recevant les différentes informations, les moyens de calcul (70) étant configurés pour obtenir un niveau d'accélération du véhicule (Av) conforme au niveau d'accélération souhaité par le conducteur, **caractérisé en ce qu'**il comporte en outre un moyen (60) fournissant une information d'inclinaison du véhicule.

2. Dispositif de régulation d'accélération et de motricité selon l'une la revendication 1, **caractérisé en ce que** le niveau d'accélération souhaité par le conducteur est déterminé par la course, ou déplacement, d'un organe de commande d'accélération (52) du véhicule.

3. Dispositif de régulation de motricité selon la revendication 2, **caractérisé en ce que** l'organe de commande d'accélération (52) est configuré pour pouvoir se déplacer, lorsqu'il est actionné par le conducteur, entre une position de repos correspondant à un niveau d'accélération nul et une position maximale correspondant à un niveau d'accélération maximum du véhicule.

4. Dispositif de régulation de motricité selon l'une des revendications 1 à 3, **caractérisé en ce que** les moyens de calcul (70) comportent en outre un régulateur d'accélération (98) pilotant les moyens de contrôle moteur (40).

5. Dispositif de régulation de motricité selon l'une des revendications 1 à 4, **caractérisé en ce que** l'unité de commande électronique (70) est un calculateur ESP assurant des fonctionnalités de sécurité du véhicule.

6. Procédé de régulation de motricité des roues d'un véhicule automobile pour la mise en oeuvre du dispositif de régulation de motricité selon les revendications précédentes, le véhicule ayant un moteur d'entraînement (50) d'au moins une roue du véhicule, des moyens de contrôle du régime moteur (40), un moyen (62) fournissant une information d'un niveau d'accélération souhaité par le conducteur du véhicule, un moyen fournissant une information d'un niveau d'accélération (Av) du véhicule (22), et une unité de commande électronique comportant des moyens de calcul (70) recevant les différentes informations, le procédé consistant à contrôler le moteur par l'unité de commande électronique (70) pour obtenir un niveau d'accélération du véhicule conforme au niveau d'accélération souhaité par le conducteur, **caractérisé en ce qu'**il comporte au moins les étapes suivantes:
- détermination d'une consigne d'accélération cible (Ac) à partir du niveau d'accélération souhaitée par le conducteur en fonction d'une adhérence (T) au sol, le niveau d'adhérence (T) étant corrigé d'un facteur lié à la valeur de la pente issue d'un moyen (60) fournissant une information d'inclinaison du véhicule lorsque le véhicule évolue sur un terrain en pente;
- comparaison entre le niveau l'accélération du véhicule (Av) et la consigne d'accélération cible (Ac);
- si l'accélération du véhicule (Av) est conforme à la consigne d'accélération cible (Ac), le contrôle moteur est inchangé, puis retour à l'étape de comparaison entre le niveau d'accélération du véhicule et la consigne d'accélération cible (Ac);
- si le niveau d'accélération du véhicule n'est pas conforme à la consigne d'accélération cible (Ac), modification du contrôle moteur puis, retour à l'étape de comparaison entre le niveau d'accélération du véhicule et la consigne d'accélération cible.

7. Procédé de régulation de motricité selon la revendication 6, **caractérisé en ce que** la consigne d'accélération cible (Ac) (90) est obtenue à partir de la volonté d'accélération souhaitée par le conducteur (92) corrigée par le niveau d'adhérence (93) des roues sur le sol.

## Claims

1. A device for regulating the motive power of at least one wheel of a vehicle, in particular a motor vehicle, comprising an engine (50) for driving the wheel, engine control means (40), a means (62) providing information on an acceleration level desired by the vehicle driver, a means (22) providing information on an acceleration level (Av) of the vehicle and an electronic control unit comprising computing means (70) receiving the various information, the computing means (70) being configured to obtain an acceleration level of the vehicle (Av) in accordance with the acceleration level desired by the driver, **characterized in that** it further comprises a means (60) providing information on the inclination of the vehicle.

2. The device for regulating acceleration and motive power according to claim 1, **characterized in that** the acceleration level desired by the driver is determined by the stroke, or displacement, of an acceleration control member (52) of the vehicle.

3. The motive power regulating device according to claim 2, **characterized in that** the acceleration control member (52) is configured so that it can move, when it is actuated by the driver, between a rest position corresponding to a zero acceleration level and a maximum position corresponding to a maximum acceleration of the vehicle.

4. The motive power regulating device according to any of claims 1 to 3, **characterized in that** the computing means (70) further comprise an acceleration regulator (98) driving the engine control means (40).

5. The motive power regulating device according to any of claims 1 to 4, **characterized in that** the electronic control unit (70) is an ESP calculator ensuring vehicle safety functions.

6. A method for regulating the motive power of the wheels of a motor vehicle for implementing the motive power regulating device according to the preceding claims, the vehicle having a drive engine (50) for at least one vehicle wheel, means for controlling the engine speed (40), a means (62) providing information on an acceleration level desired by the vehicle driver, a means providing information on an acceleration level (Av) of the vehicle (22), and an electronic control unit comprising computing means (70) receiving the various information, the method consisting in controlling the engine by means of the electronic monitoring unit (70) so as to obtain an acceleration level of the vehicle in accordance with the acceleration level desired by the driver, **characterized in that** it comprises at least the following steps:
- determining a target acceleration setpoint (Ac) from the acceleration level desired by the driver depending on ground adherence (T), the level of adherence (T) being corrected by a coefficient related to the slope value from a means (60) providing information on the inclination of the vehicle when the vehicle is moving on sloped ground;
- comparing the acceleration level of the vehicle (Av) with the target acceleration setpoint (Ac);
- if the acceleration of the vehicle (Av) is in accordance with the target acceleration setpoint (Ac), leaving engine control unchanged, then returning to the step of comparing the acceleration level of the vehicle with the target acceleration setpoint (Ac);
- if the acceleration level of the vehicle is not in accordance with the target acceleration setpoint (Ac), modifying engine control, then returning to the step of comparing the acceleration level of the vehicle with the target acceleration setpoint.

7. The motive power regulating method according to claim 6, **characterized in that** the target acceleration setpoint (Ac) (90) is obtained from the acceleration wish expressed by the driver (92) corrected by the level of adherence (93) of the wheels on the ground.

## Patentansprüche

1. Vorrichtung zum Regulieren der Antriebskraft mindestens eines Rades eines Fahrzeugs, insbesondere eines Kraftfahrzeugs, umfassend einen Motor (50) zum Antreiben des Rades, Motorkontrollmittel (40), ein Mittel (62), das eine Information über ein vom Fahrer des Fahrzeugs gewünschtes Beschleunigungsniveau bereitstellt, ein Mittel (22), das eine Informationen über ein Beschleunigungsniveau (Av) des Fahrzeugs bereitstellt, und eine elektronische Steuereinheit, die Rechenmittel (70) umfasst, welche die verschiedenen Informationen empfangen, wobei die Rechenmittel (70) konfiguriert sind, um ein Beschleunigungsniveau des Fahrzeugs (Av) gemäß dem vom Fahrer gewünschten Beschleunigungsniveau zu erzielen, **dadurch gekennzeichnet, dass** sie ferner ein Mittel (60) umfasst, das eine Information über die Neigung des Fahrzeugs bereitstellt.

2. Vorrichtung zum Regulieren der Beschleunigung und der Antriebskraft nach Anspruch 1, **dadurch gekennzeichnet, dass** das vom Fahrer gewünschte Beschleunigungsniveau durch den Hub bzw. Weg eines Beschleunigungssteuerorgans (52) des Fahrzeugs bestimmt wird.

3. Vorrichtung zum Regulieren der Antriebskraft nach Anspruch 2, **dadurch gekennzeichnet, dass** das Beschleunigungssteuerorgan (52) konfiguriert ist, um sich, wenn es von dem Fahrer betätigt wird, zwischen einer Ruheposition, die einem Beschleunigungsniveau gleich Null entspricht, und einer Höchstposition, die einer Höchstbeschleunigung des Fahrzeugs entspricht, bewegen zu können.

4. Vorrichtung zum Regulieren der Antriebskraft nach einem der Ansprüche 1 bis 3, **dadurch gekennzeichnet, dass** die Rechenmittel (70) ferner einen Beschleunigungsregler (98) umfassen, der die Motorkontrollmittel (40) ansteuert.

5. Vorrichtung zum Regulieren der Antriebskraft nach einem der Ansprüche 1 bis 4, **dadurch gekennzeichnet, dass** die elektronische Steuereinheit (70) ein ESP-Rechner ist, der Funktionen für die Fahrzeugsicherheit sicherstellt.

6. Verfahren zum Regulieren der Antriebskraft der Räder eines Kraftfahrzeugs für den Einsatz der Vorrichtung zum Regulieren der Antriebskraft nach den vorhergehenden Ansprüchen, wobei das Fahrzeug einen Antriebsmotor (50) für mindestens ein Rad des Fahrzeugs, Mittel zum Kontrollieren der Motorgeschwindigkeit (40), ein Mittel (62), das eine Information über ein vom Fahrer des Fahrzeugs gewünschtes Beschleunigungsniveau bereitstellt, ein Mittel, das eine Information über ein Beschleunigungsniveau (Av) des Fahrzeugs (22) bereitstellt, und eine elektronische Steuereinheit, die Rechenmittel (70) umfasst, welche die verschiedenen Informationen empfangen, aufweist, wobei das Verfahren darin besteht, den Motor mittels der elektronischen Steuereinheit (70) zu kontrollieren, um ein Beschleunigungsniveau des Fahrzeugs gemäß dem vom Fahrer gewünschten Beschleunigungsniveau zu erzielten, **dadurch gekennzeichnet, dass** es mindestens die folgenden Schritte umfasst:
- Bestimmen eines Zielsollwertes (Ac) der Beschleunigung aus dem vom Fahrer gewünschten Beschleunigungsniveau, in Abhängigkeit von einer Bodenhaftung (T), wobei das Haftungsniveau (T) um einen Faktor korrigiert wird, der mit dem Wert der Schräge zusammenhängt, der aus einem Mittel (60) stammt, das eine Information über die Neigung des Fahrzeugs bereitstellt, wenn das Fahrzeug sich in Gelände mit Gefälle bewegt;
- Vergleichen des Beschleunigungsniveaus des Fahrzeugs (Av) mit dem Zielsollwert (Ac) der Beschleunigung;
- wenn die Beschleunigung des Fahrzeugs (Av) mit dem Zielsollwert (Ac) der Beschleunigung übereinstimmt, Motorkontrolle unverändert Lassen, dann Zurückkehren zum Schritt des Vergleichens des Beschleunigungsniveaus des Fahrzeugs mit dem Zielsollwert (Ac) der Beschleunigung;
- wenn das Beschleunigungsniveau des Fahrzeugs nicht mit dem Zielsollwert (Ac) der Beschleunigung übereinstimmt, Ändern der Motorkontrolle, dann Zurückkehren zum Schritt des Vergleichens des Beschleunigungsniveaus des Fahrzeugs mit dem Zielsollwert der Beschleunigung.

7. Verfahren zum Regulieren der Antriebskraft nach Anspruch 6, **dadurch gekennzeichnet, dass** der Zielsollwert (Ac) der Beschleunigung (90) aus dem vom Fahrer gewünschten Beschleunigungswunsch (92) erzielt wird, korrigiert durch das Haftungsniveau (93) der Räder am Boden.
